Europäisches Patentamt

European Patent Office

Office européen des brevets

(11) Publication number: **0 287 844**
**A2**

# EUROPEAN PATENT APPLICATION

(21) Application number: **88104885.4**

(22) Date of filing: **25.03.88**

(51) Int. Cl.4: **G06F 12/08**

(30) Priority: **28.03.87 JP 73010/87**

(43) Date of publication of application:
**26.10.88 Bulletin 88/43**

(84) Designated Contracting States:
**DE FR GB**

(71) Applicant: **NEC CORPORATION**
**33-1, Shiba 5-chome, Minato-ku**
**Tokyo 108(JP)**

(72) Inventor: **Toshikatsu, Mori**
**c/o NEC Corporation 33-1,Shiba 5-chome**
**Minato-ku Tokyo(JP)**

(74) Representative: **Vossius & Partner**
**Siebertstrasse 4 P.O. Box 86 07 67**
**D-8000 München 86(DE)**

(54) **Cache memory circuit using dual port memories.**

(57) In a cache memory circuit which is operable in response to both an operand request and an operation code request which comprises an address tag memory portion (26), a valid tag memory portion (27), and a data memory portion (28), a dual port memory is used as each of the address tag memory portion, the valid memory portion, and the data memory portion to be accessed in response to both an input operand address and an input operation code address given through a pair of ports of the dual port memory on production of the operand and the operation code requests, respectively. Use of the dual port memory enables simultaneous reception of both the operand and the operation code requests.

FIG. 1

EP 0 287 844 A2

## CACHE MEMORY CIRCUIT USING DUAL PORT MEMORIES

This invention relates to a cache memory for use in memorizing a copy of a part of information memorized in a main memory.

As described in detail by Alan J. Smith in "Computing Surveys," Vol. 14, No. 3 (September 1982), pages 473-530, a cache memory is generally intermediate between a main memory and a central processing unit and carries out a write-in operation and a read-out operation at a high speed in comparison with the main memory. Such a cache memory serves to substantially shorten an access time of the main memory by utilizing a property of locality of necessary information accessed by a program which runs on an information processing system. Specifically, the cache memory is loaded from the main memory with a block of information which has a predetermined size and which includes a previously accessed word. The cache memory can considerably reduce memory accesses issued to the main memory because most of the memory accesses can be processed by the use of the cache memory.

A recent tendency is that such a cache memory is used in an information processing system which includes a microprocessor having a high operation speed. In order to utilize ability of the microprocessor to a maximum extent, consideration has been made about arranging such a cache memory in the microprocessor. Practically, such arrangement of the cache memory in the microprocessor has been realized by virtue of development of integration. The following description will be mainly made on an assumption such that the cache memory is included in the microprocessor.

It may be mentioned here that a memory access request is divisible into an operation code request and an operand request which are issued by a processing module included in the microprocessor and which request an operation code and an operand, respectively. Under the circumstances, arbitration between the operation code request and the operand request is made within the processing module while the operation code request and the operand request are delivered from the processing module to an external circuit through an external bus in a time division fashion.

When a cache memory is connected to the external bus and accessed by a succession of the memory access requests in a time division fashion, a queue of the memory access requests is often formed to be dealt with in the cache memory. Accordingly, this structure has a low efficiency.

Alternatively, a cache memory is divided into first cache and second cache sections which are accessed by the operand and the operation code requests, respectively, and each of which must have an address storage portion and a data storage portion. However, this structure is disadvantageous in that a large memory capacity is necessary in the cache memory and results in a reduction of yield on manufacturing the microprocessor by a large scale integration technique.

Summary of the Invention:

It is an object of this invention to provide a cache memory circuit which is effectively operable in response to both an operand request and an operation code request.

It is another object of this invention to provide a cache memory circuit of the type described, which can be used as a cache memory arranged in a microprocessor.

It is still another object of this invention to provide a cache memory circuit of the type described, which can avoid occurrence of a terribly long queue.

It is yet another object of this invention to provide a cache memory circuit of the type described, which is simple in structure.

A cache memory circuit to which this invention is applicable is operable in response to an input operand address and an input operation code address to produce first and second output signals. The first output signal represents whether or not the input operand address and the input operation code address are stored in the cache memory circuit while the second output signal is specified by an output operand and an output operation code. According to this invention, the cache memory circuit comprises first memory means having first and second ports and a first set of addresses for memorizing a plurality of operand addresses and a plurality of operation code addresses to produce a selected one of the operand addresses and a selected one of the operation code addresses in response to the input operand address and the input operation code address given through the first and the second ports, respectively, first output means responsive to the selected one of the operand addresses and the selected one of the operation code addresses for producing the first output signal, second memory means having first and second data ports and a second set of addresses for memorizing a plurality of operands and a plurality of operation codes in the second set of the addresses to produce an indicated one of the operands and an indicated one of the operation codes as the output operand and the output operation code in response to the input operand address and the input operation code address given through the first and the second data ports, respectively; and second output means responsive to the output operand and the output operation code for producing the second output signal.

Brief Description of the Drawing:

Fig. 1 is a block diagram of a cache memory circuit according to a preferred embodiment of this invention; and

Fig. 2 is a circuit diagram of a memory cell which is used in the cache memory circuit illustrated in Fig. 1.

Description of the Preferred Embodiment:

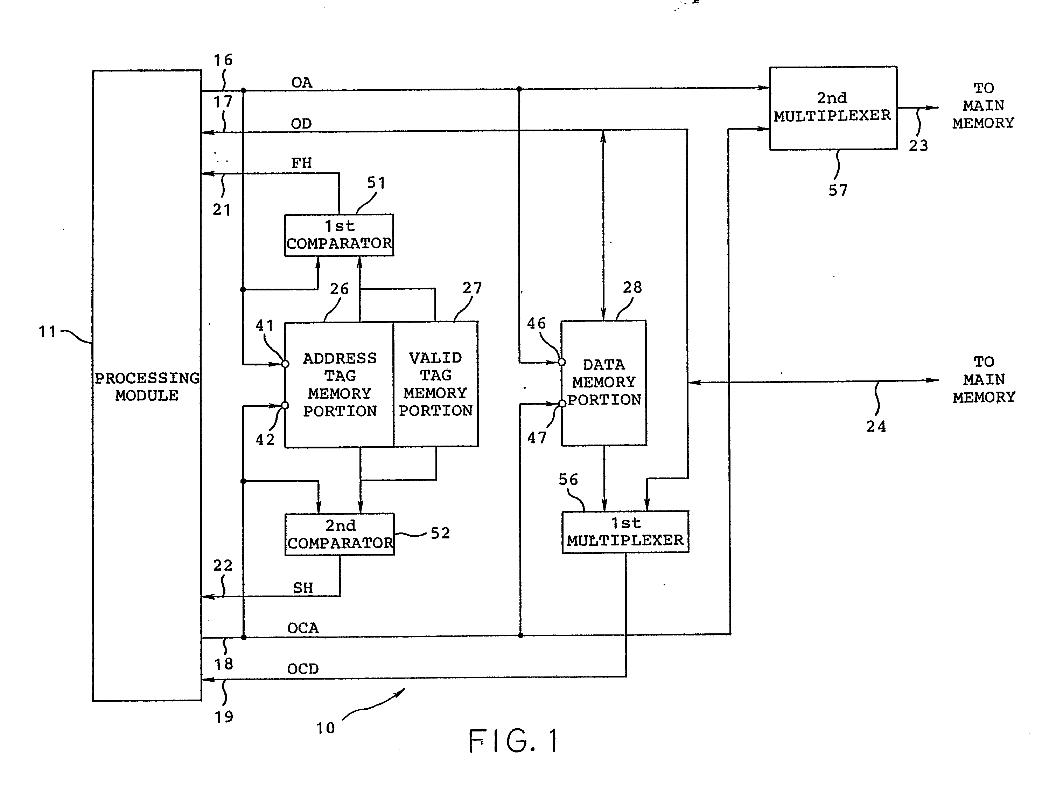

Referring to Fig. 1, a cache memory circuit 10 according to a preferred embodiment of this invention is intermediate between a processing module 11 and a main memory (not shown) and is assumed to be included in a microprocessor together with the illustrated processing module 11. The processing module 11 carries out processing in a pipeline fashion and can therefore substantially concurrently issue an operand request and an operation code request to the cache memory circuit 10. In Fig. 1, the operand request may be divisible into an operand readout request and an operand write-in request, although the following description will be mainly made as regards the operand readout request. In this connection, the illustrated operand request is given as an input operand request and is processed by delivering an operand address signal OA from the processing module 11 to the cache memory circuit 10 and by sending an operand data signal OD from the cache memory circuit 10 to the processing module 11. The operand address signal OA is indicative of an input operand address.

Likewise, the operation code request is divisible into an operation code readout request and an operation code write-in request, although the operation code write-in request will not be described in detail. Accordingly, the operation code readout request is given as an input operation code request and is processed by delivering an operation code address signal OCA from the processing module 11 to the cache memory circuit 10 and by sending an operation code data signal OCD from the cache memory circuit 10 to the processing module 11. The operation code address signal OCA is indicative of an input operation code address.

The operand address signal OA and the operand data signal OD are transmitted through an operand address bus 16 and an operand data bus 17, respectively. On the other hand, the operation code address signal OCA and the operation code data signal OCD are transmitted through an operation code address bus 18 and an operation code data bus 19, respectively.

In addition, the cache memory circuit 10 supplies the processing module 11 with first and second hit signals FH and SH through first and second hit signal lines 21 and 22, respectively, in a manner to be described later. The first and the second hit signals FH and SH are produced by the cache memory circuit 10 in response to the operand address signal OA and the operation code address signal OCA, respectively, and may be collectively called a first output signal. On the other hand, the operand data signal OD and the operation code data signal OCS may be collectively referred to as a second output signal.

Furthermore, the cache memory circuit 10 is connected to the main memory through an external address bus 23 and an external data bus 24. It is to be noted that the external address bus 23 is used in common to send the operand address signal OA and the operation code address signal OCA to the main memory and that the external data bus 24 is also used in common to the operand data signal OD and the operation code data signal OCD.

Now, the cache memory circuit 10 illustrated in Fig. 1 comprises an address tag memory portion 26, a valid tag memory portion 27, and a data memory portion 28, each of which is implemented by a dual port memory which can be specified by memory cells used therein.

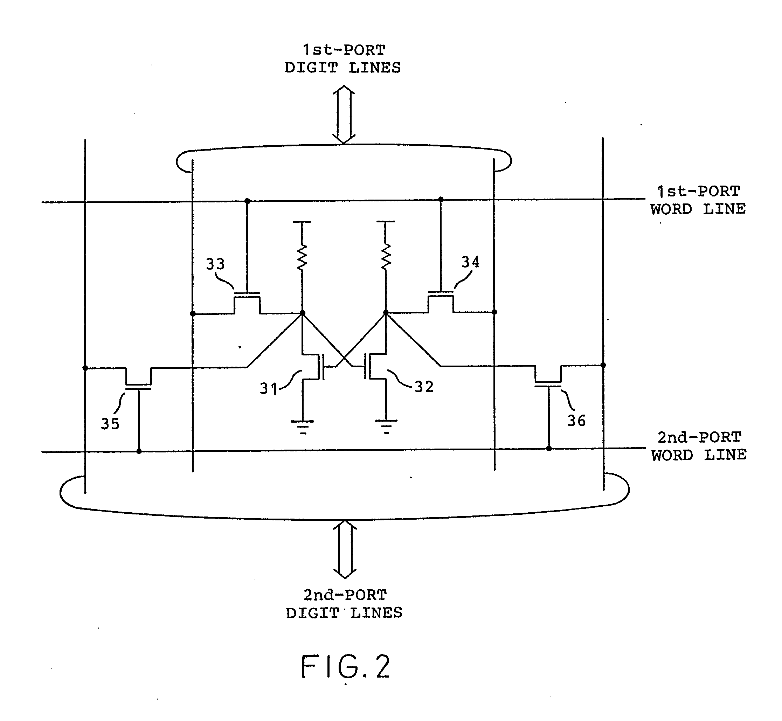

Referring to Fig. 2, each memory cell of the dual port memory has first and second ports each of which is defined by a pair of digit lines and a word line. The digit lines and the word line of the first port may be called first-port digit lines and first-port word line, respectively, while the digit lines and the word line of the second port may be referred to as second-port digit lines and second-port word line, respectively.

As shown in Fig. 2, the illustrated memory cell comprises a pair of storage transistors 31 and 32 which are connected to each other and which serves to memorize a single information bit. The first-port digit lines and the first-port word line are connected to the storage transistors 31 and 32 through a first pair of switching transistors 33 and 34 while the second-port digit lines and the second-port word line are also connected to the storage transistors 31 and 32 through a second pair of switching transistors 35 and 36. With this structure, a single information bit can be written into or read out of the memory cell through both the first and the second ports. Such write-in and readout operations are known in the art and will not be described any longer. Such a dual port memory is usually formed on a semiconductor chip by the use of integration technique. It is known in the art that the dual port memory occupies a chip area in comparison with an area occupied by a pair of single port memories. Accordingly, use of such a dual port memory makes it possible to reduce a chip area in comparison with use of a single port memory pair, as will become clear as the description proceeds.

In Fig. 1, the address tag memory portion 26 and the valid tag memory portion 27 may be collectively referred to as a first memory because they are correlated with each other in use. The address tag memory portion 26, namely, the first memory has first and second address ports 41 and 42 connected to the operand and the operation code address buses 16 and 17, respectively. In addition, the address tag memory portion 26 has a first set of addresses which can be loaded with address tags which are divisible into operand address tags and operation code address tags memorized in first and second partial areas of the address tag memory portion 26, respectively. In addition, the first-set addresses of the address tag memory portion 26 are common to the valid tag memory portion 27. The valid tag memory portion 27 has also first and second valid tag areas for memorizing the validity tags corresponding to the operand and the operation code addresses, respectively.

In any event, the validity tags are representative of validity or invalidity of the address tags memorized in the corresponding addresses of the address tag memory portion 26.

With this structure, the first and the second partial address areas are accessed by the operand address signal OA and the operation code address signal OCA, respectively.

Likewise, the data memory portion 28 is implemented by the dual port memory and has first and second data ports 46 and 47 connected to the operand and the operation code address buses 16 and 17, respectively, and first and second data memory areas for memorizing operand data signals and operation code data signals, respectively.

When the operand address signal OA is given through the operand address bus 16 so as to carry out the readout operation, a selected one of the address tags and a selected one of the validity tags are read out of the first partial area and the first valid area, respectively, and are sent to a first comparator 51. The first comparator 51 compares the selected address tag with a corresponding tag portion of the operand address signal OA on the operand address bus 16 with reference to the selected validity tag read out of the valid tag memory portion 27. Such comparison is carried out in a known manner and will not be described any longer. As a result, the first hit signal FH is supplied from the first comparator 51 to the processing module 11 on detection of coincidence between the selected address tag and the corresponding tag portion, provided that the validity tag is representative of validity.

On production of the first hit signal FH, the data memory portion 28 is accessed by the operand address signal OA to produce an indicated one of the operand data signals OD. Specifically, the indicated operand data signal OD is read out of the first data memory area of the data memory portion 28 and is sent through the operand data bus 17 to the processing module 11.

On the other hand, let the first hit signal FH be not produced from the first comparator 51 due to detection of incoincidence. In this event, the operand address signal OA is delivered to the main memory in a manner to be described later.

When the operation code address signal OCA is given to the address tag memory portion 26 through the operation code address bus 18, a selected one of the operation code address tags and a corresponding one of the validity tags are read out of the address tag memory portion 26 and the valid tag memory portion 27, respectively, and are delivered to a second comparator 52. The second comparator 52 compares the selected operation code address tag with a corresponding tag portion of the operation code address OCA on the operation code address bus 18 with reference to the selected validity tag in a manner similar to that of the first comparator 51. As a result, the second hit signal SH is sent from the second comparator 52 to the processing module 11 on detection of coincidence between the selected operation code address tag and the corresponding tag portion of the operation code address OCA like the first comparator 51.

On detection of the coincidence between the selected operation code address tag and the corresponding tag portion, the operation code address signal OCA is also delivered to the data memory portion 28. As a result, an indicated one of the operation code data signals is read out of the second data memory area of the data memory portion 28 to be sent to a first multiplexer 56 which is connected to the external data bus 24 and which is operable in a manner as will become clear. Inasmuch as the first multiplexer 56 usually selects the data memory portion 28, the indicated operation code data signal is supplied through the first multiplexer 56 to the processing module 11.

Under the circumstances, the first and the second comparators 51 and 52 will be named a first output circuit for producing the first output signal which is a combination of the first and the second hit signals FH and SH while the first multiplexer 56, the operand data bus 17, and the operation code data bus 19 may be called a second output circuit for producing the second output signal which is a combination of the operand data signal OD and the operation code data signal OCD.

It is to be noted that the illustrated cache memory circuit 10 can process the operand request and the operation code request even when both the operand request and the operation code request are concurrently issued from the processing module 11 to the cache memory circuit 10. This is because the operand and the operation code requests are independently processed in the cache memory circuit 10.

On the other hand, let neither the first hit signal FH nor the second hit signal SH be produced from the cache memory circuit 10. In this case, the main memory must be accessed through the external address bus 23 which is common to the operand address signal OA and the operation code address signal OCA as mentioned before.

For this purpose, the operand address signal OA and the operation code address signal OCA are sent from the processing module 11 to a second multiplexer 57. The second multiplexer 57 selects either the operand address signal OA or the operation code address signal OCA as a memory address signal in a known manner under control of the processing module 11.

Responsive to the memory address signal, the main memory carries out block transfer operation in a usual manner to send a data block in question to the cache memory circuit 10 through the external data bus 24 which is common to the operand request and the operation code request, as mentioned before. When read out of the main memory in response to the operand request, the data block is delivered through the operand data bus 17 to the processing module 11. On the other hand, the data block is sent to the first multiplexer 56 in response to the operation code request and is selected by the first multiplexer 56 to be delivered to the processing module 11 through the operation code data bus 19.

The data block read out of the main memory should be written into the data memory portion 28 of the cache memory circuit 10. In addition, the address tag memory portion 26 and the valid tag memory portion 27 should be renewed in accordance with the data block in question. Such a write-in operation of the data block into the data memory portion 28 and renewal of the address tag memory portion 26 and the valid tag memory portion 27 can be carried out in a known manner and will not be described any longer.

Anyway, each of the operand request and the operation code request can be processed independently of each other by using the dual port memories as the address tag memory portion 26, the valid tag memory portion 27, and the data memory portion. This makes it possible to simultaneously process both the operand request and the operation code request and to therefore avoid occurrence of a long queue of the operand request and the operation code request which are kept unprocessed. In addition, the illustrated cache memory circuit 10 dispenses with a pair of single port memories which is otherwise necessary to form each of the address tag memory portion 26, the valid tag memory portion 27, and the data memory portion 28. As mentioned before, it is possible to reduce a chip size by the use of the dual port memories as compared with the use of the single port memory pairs.

Operations of the processing module 11 and the main memory can be carried out in a known manner and will not be described any longer.

While this invention has thus far been described in conjunction with a preferred embodiment thereof, it will readily be possible for those skilled in the art to put this invention into practice in various other manners. For example, the cache memory circuit 10 may be placed between the main memory and a central processing unit. ,

## Claims

1. A cache memory circuit operable in response to an input operand address and an input operation code address to produce first and second output signals, said first output signal representing whether or not said input operand address and said input operation code address are stored in said cache memory circuit while said second output signal is specified by an output operand and an output operation code, wherein the cache memory circuit comprises:

first memory means having first and second ports and a first set of addresses for memorizing a plurality of operand addresses and a plurality of operation code addresses to produce a selected one of said operand addresses and a selected one of said operation code addresses in response to said input operand address and said input operation code address given through said first and said second ports, respectively;

first output means responsive to said selected one of the operand addresses and said selected one of the operation code addresses for producing said first output signal;

second memory means having first and second data ports and a second set of addresses for memorizing a plurality of operands and a plurality of operation codes in said second set of the addresses to produce an indicated one of the operands and an indicated one of the operation codes as said output operand and said output operation code in response to said input operand address and said input operation code address given through said first and said second data ports, respectively; and

second output means responsive to said output operand and said output operation code for producing said second output signal.

2. A cache memory circuit as claimed in Claim 1, wherein said first memory means comprises:

address memorizing means having said first and said second ports for memorizing operand address tags and operation code address tags as said operand addresses and said operation code addresses to produce a selected one of said operand address tags and a selected one of said operation code address tags as said selected operand address and said selected operand code address, respectively; and

validity tag memorizing means operation in cooperation with said address memorizing means for memorizing validity tags which correspond to said operand and said operation code address tags, respectively, and which are indicative of validity of said operand and said operation code address tags, respectively, said validity tag memorizing means producing first and second ones of said validity tags corresponding to said selected one of the operand address tags and said selected one of the operation code address tags, respectively;

said first output means being further responsive to said first and said second validity tags and comprising:

first comparing means responsive to said selected operand address, said input operand address and said first validity tag for comparing said selected operand address with said input operand address with reference to said first validity tag to produce a first comparison signal representative of a result of comparison in said first comparing means;

second comparing means responsive to said selected operation code address, said input operation code address, and said second validity tag for comparing said selected operation code address and said input operation code address with reference to said second validity tags to produce a second comparison signal representative of a result of comparison in said second comparing means; and

means for producing said first and second comparison signals as said first output signal.

3. A cache memory circuit as claimed in Claim 1 or 2, said cache memory circuit cooperating with a processing module, wherein said second output means comprises:

means for supplying said output operand to said processing module as a part of said second output signal; and

means for supplying said output operation code to said processing module as another part of said second output signal.

FIG. 1

1st-PORT
DIGIT LINES

1st-PORT
WORD LINE

33

34

31

32

35

36

2nd-PORT
WORD LINE

2nd-PORT
DIGIT LINES

0 287 844

FIG.2